Europäisches Patentamt

European Patent Office

Office européen des brevets

(19)

(11) Veröffentlichungsnummer: **0 292 830 B1**

(12) **EUROPÄISCHE PATENTSCHRIFT**

(45) Veröffentlichungstag der Patentschrift: **25.09.91**

(51) Int. Cl.⁵: **B60T 13/68**

(21) Anmeldenummer: **88107820.8**

(22) Anmeldetag: **16.05.88**

(54) **Führerbremsventileinrichtung für Druckluftbremsen von Schienenfahrzeugen.**

(30) Priorität: **29.05.87 DE 3718228**

(43) Veröffentlichungstag der Anmeldung:
**30.11.88 Patentblatt 88/48**

(45) Bekanntmachung des Hinweises auf die
Patenterteilung:
**25.09.91 Patentblatt 91/39**

(84) Benannte Vertragsstaaten:
**AT DE FR**

(56) Entgegenhaltungen:
**EP-A- 0 152 958**
**DE-C- 1 160 490**
**US-A- 3 709 564**

(73) Patentinhaber: **KNORR-BREMSE AG**
**Moosacher Strasse 80 Postfach 401060**
**W-8000 München 40(DE)**

(72) Erfinder: **Becker-Lindhorst, Klaus, Dr.**
**Angerstrasse 13**
**W-8038 Gröbenzell(DE)**
Erfinder: **Breinl, Walter, Dr.**
**Waldhornstrasse 22**
**W-8000 München 50(DE)**
Erfinder: **Kessel, Gerd, Dr.**
**Lechweg 15**
**W-8037 Olching(DE)**

## Beschreibung

Die Erfindung betrifft eine Führerbremsventileinrichtung für Druckluftbremsen von Schienenfahrzeugen, mit

- zumindest einer in einem Führerstand anzuordnen Bedieneinheit, umfassend einen willkürlich verstellbaren Druckregler zur Steuerung eines ersten Vorsteuerdruckes und willkürlich schaltbare, elektrische Schaltorgane zum Überwachen der Erregung von einen zweiten Vorsteuerdruck steuernden Magnetventilen,

- einer Relaiseinheit, die ein Relaisventil zum Steuern eines Hauptluftleitungsdruckes aufweist, und

- einer Umschaltvorrichtung, welche dem Relaisventil in einer Normalschaltstellung bei intakten, elektrischen Schaltorganen bzw. Magnetventilen den zweiten Vorsteuerdruck, in einer Notschaltstellung bei gestörten, elektrischen Schaltorganen bzw. Magnetventilen den ersten Vorsteuerdruck an einen Steuerdruckeingang zuführt.

Eine den vorstehend genannten Merkmalen entsprechende Führerbremsventileinrichtung ist der FR-E-78 660, 4. Zusatz zur FR-A-1 240 591, entnehmbar. Die bekannte Führerbremsventileinrichtung weist am Führerstand Druckknopfshalter auf, mit welchen unmittelbar die Erregung der den zweiten Vorsteuerdruck steuernden Magnetventile steuerbar ist. Um bei Schäden in der Elektrik, beispielsweise bei Stromausfall, weiterfahren zu können, ist eine Umschaltvorrichtung vorgesehen, die einen Absperrhahn für die Magnetventile, ein zeitabhängig zu betätigendes Drucksteuerventil mit einem Einlaß- und einem Auslaß-Schieberventil und, falls dieses Drucksteuerventil zugleich das direkte Führerbremsventil ist, einen Umstellhahn umfaßt, die alle voneinander unabhängig zu betätigen sind. Bei Störung der Elektrik ist somit zur Aufnahme des Notbetriebes manuell der Absperrhahn zu schließen, sodann gegebenenfalls der Umstellhahn umzustellen und schließlich mittels des Drucksteuerventils die erforderliche Drucksteuerung vorzunehmen. Bei Verwendung des direkten Führerbremsventils als Drucksteuerventil ist dabei mit einem Drucksprung für die Ansteuerung des Relaisventils zu rechnen, da zumeist der augenblicklich vorliegende, vom Drucksteuerventil ausgesteuerte Druck stark vom zum Zeitpunkt der Umstellung am Steuereingang des Relaisventils anstehenden Vorsteuerdruck abweichen wird; es ist also eine sofortige Anpassung des vom Drucksteuerventil ausgesteuerten Druckes an die jeweils erforderliche Druckhöhe nötig. Sollte anstelle des erwähnten Drucksteuerventils ein an sich günstiger, nämlich stellungsabhängig bedienbarer Druckregler vorgesehen sein, verschärfen sich die Anspassungsprobleme erheblich. Bei Vorhandensein eines nur für die Notsteuerung vorgesehenen Drucksteuerventils - ein Druckregler ist in dieser Schaltung überhaupt nicht verwendbar - ist ein manuelles Schließen des Absperrhahnes nötig; bei dieser Ausführung besteht jedooh die Gefahr, daß während des Normalbetriebes der Führerbremsventileinrichtung durch ungewollte oder unsachgemäße Bedienung des Drucksteuerventils unerwünschte Änderungen des am Relaisventil wirksamen Vorsteuerdruckes bewirkt werden.

Aus der DE-C-1 275 571 ist ein Führerbremsventile mit einer Bedieneinheit bekannt, bei welcher mittels eines Handhebels ein Druckregler stellungsabhängig und gemeinsam mit diesem über Nokkenscheiben elektrische Schalter betätigbar sind. Der Druckregler überwacht einen einem Relaisventil zuzuführenden Steuerdruck, die Zuführung ist durch ein von einem der Schalter schaltbares Magnetventil unterbrechbar. Im weiteren dienen die durch einen pneumatischen Bremsdruck rückstellbaren Schalter der unmittelbaren Ansteuerung von elektropneumatischen Bremssteuerungs-Magnetventilen, nicht aber dem Ansteuern von einen zweiten Vorsteuerdruck überwachenden Magnetventilen.

Mit der EP-A-152 958 ist eine Führerbremsventileinrichtung bekannt geworden, bei welcher am Bedienstand elektrische Schaltorgane angeordnet sind, welche über eine Regelelektronik mit Fehlerüberwachung Magnetventile zum Steuern eines einem Relaisventil zuzuführenden Vorsteuerdruckes ansteuern. Mittels der Regelelektronik ist ein optimales Ansteuern des Relaisventils zum raschen und genauen Realisieren des jeweils geforderten Bremsverhaltens erreichbar. Es ist keine von der Regelelektronik unabhängige Möglichkeit zum Erstellen eines Vorsteuerdruckes vorgesehen.

Es ist Aufgabe der Erfindung, eine Führerbremsventileinrichtung der eingangs genannten Art mit einfachen Mitteln derart auszubilden, daß bei Einordnen einer Regelelektronik der aus der erwähnten EP-A-152 958 bekannten Art zwischen die elektrischen Schaltorgane und die Magnetventile ein Notbetrieb bei Störungen in der Elektrik bzw. Elektronik möglich ist, wobei zum Zeitpunkt des Auftretens der Störung ein selbsttätiger, keinerlei manuelle Schaltvorgänge erfordernder, ruckfreier Übergang vom Normal- auf den Notbetrieb erfolgen soll.

Diese Aufgabe wird, ausgehend von einer Führerbremsventileinrichtung der eingangs angegebenen Art, nach der Erfindung dadurch gelöst, daß

- mittels eines Bedienhebels der Druckregler und die elektrischen Schaltorgane gemeinsam und synchron stellungsabhängig einstellbar sind,

- die elektrischen Schaltorgange eine Regelelektronik mit Fehlerüberwachung beinhalten, und
- die Umschaltvorrichtung ein von der Fehler-überwachung der Regelelektronik ansteuerba-res Wechselmagnetventil zwischen dem er-sten und dem zweiten Vorsteuerdruck und dem Steuerdruckeingang des Relaisventils aufweist, das bei fehlender Fehlermeldung der Fehlerüberwachung erregt und in die Normalschaltstellung geschaltet, bei Vorliegen einer Fehlermeldung unerregt und in die Notschaltstellung geschaltet ist.

Die stellungsabhängige Einstellbarkeit von Druckregler und Schaltorganen bedeutet hierbei, daß bestimmten Stellungen des Bedien-hebels bestimmte Einstellungen des Druckre-glers und der Schaltorgane zugeordnet sind, welche bestimmten Bremssteuerungsvorgängen, beispielsweise der Einsteuerung einer bestimmten Bremsstufe, entsprechen. Hierzu im Gegensatz steht die im Hinblick auf die FR-E-78 660 erwähnte zeitabhängige Steuerung, bei welcher die Öffnungszeit des Einlaß- bzw. Auslaßschieberventils die Brem-sensteuerung, also die sich ergebende Bremsstufe bestimmt.

Nach der weiteren Erfindung kann es zweckmäßig sein, wenn an der Bedieneinheit ein willkürlich betätigbarer Schalter zum zusätzlichen, willkürlichen Steuern des Erregungszustandes des Wechselmagnetventils vorgesehen ist.

Es ist erwähnenswert, daß uanbhängig davon, ob der weitere Erfindungsgedanke realisiert wird oder nicht, im Normalbetrieb das Relaisventil allein vom unverfälschbaren, von den Magnetventilen überwachten Vorsteuerdruck ansteuerbar ist, durch die weitere Ausbildung der Erfindung wird lediglich ein willkürlicher, von der Fehlererkennung der Re-gelelektronik unabhängiger Übergang vom Normal-auf den Notbetrieb ermöglicht.

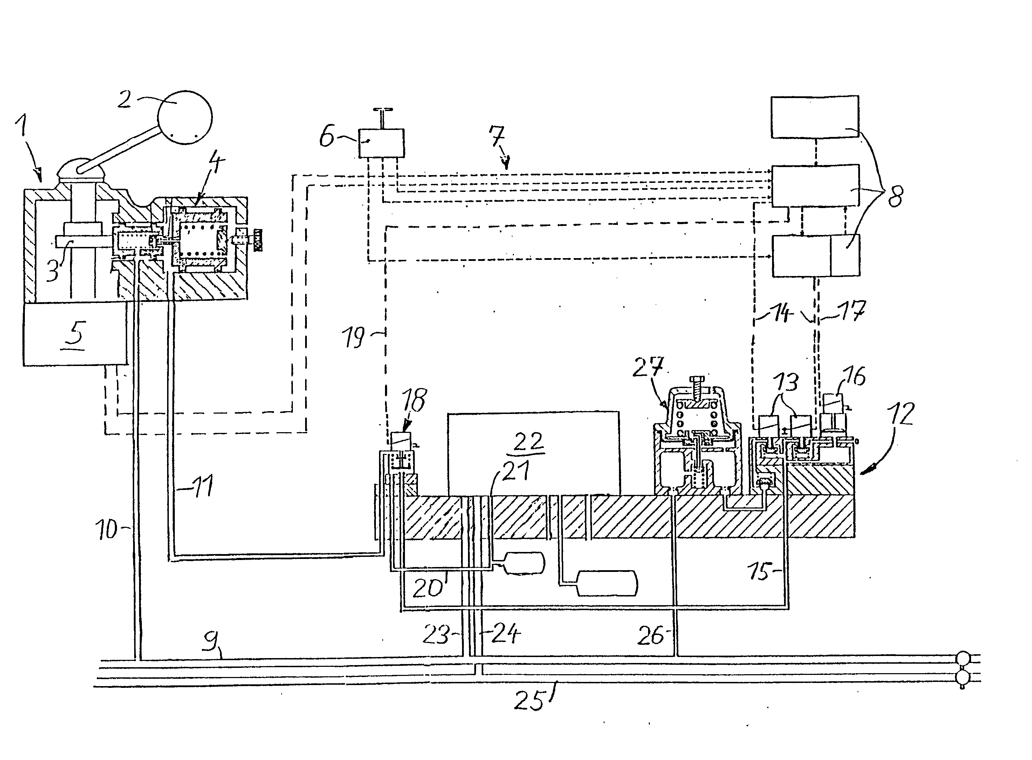

In der Zeichnung ist ein Ausführungsbeispiel für eine nach der Erfindung ausgebildete Führerbremsventileinrichtung in ihren wesentlichen Teilen dargestellt.

Eine im Führerstand angeordnete Bedieneinheit 1 weist einen Bedienhebel 2 auf, mit welchem über eine Nockenscheibe 3 ein Druckregler 4 verstellbar ist. Zugleich sind mittels des Bedienhebels 2 im einzelnen nicht dargestellte, in einem Gehäuse angeordnete, elektrische Schaltorgane 5 schaltbar, die Schaltorgane 5 können entsprechend der bereits erwähnten EP-A-152 958 ausgebildet sein. Weiterhin ist im Führerstand ein willkürlich betätigbarer elektrischer Schalter 6 untergebracht. Die Schaltorgane 5 und der Schalter 6 sind durch elektrische Leitungen 7 mit einer Regelelektronik 8 verbunden, welche ebenfalls gemäß der EP-A-152 958 ausgebildet sein kann und welche jedenfalls eine Fehlerüberwachung beinhaltet.

Der Druckregler 4 ist aus einer als Druckluftquelle dienenden Hauptbehälterleitung 9 durch eine Zweigleitung 10 mit Druckluft versorgt, der Ausgangsdruck des Druckreglers 4 wird als erster Vorsteuerdruck durch eine Steuerleitung 11 einer Relaiseinheit 12 zugeführt.

Die Relaiseinheit 12 weist Magnetventile 13 auf, welche über elektrische Leitungen 14 von der Regelelektronik 8 ansteuerbar sind; die Magnetventile 13 steuern einen in einer Verbindung 15 herrschenden, zweiten Vorsteuerdruck. Ein Druck-Spannungs-Wandler 16 meldet über eine elektrische Leitung 17 der Regelelektronik 8 den Ist-Wert des zweiten Vorsteuerdruckes zurück. Die Steuerleitung 11 und die Verbindung 15 führen zu den beiden Eingängen eines Wechselmagnetventiles 18, dessen Erregung über eine elektrische Leitung 19 von der Fehlerüberwachung der Regelelektronik 8 gesteuert ist. Das Wechselmagnetventil 18 verbindet in seiner Normalschaltstellung im erregten Zustand die Verbindung 15, in seiner Notschaltstellung im unerregten Zustand dagegen die Steuerleitung 11 mit einer Verbindung 20, die zum Steuerdruckeingang 21 eines Relaisventils 22 führt. Das aus der Hauptbehälterleitung 9 durch eine Zweigleitung 23 mit Druckluft versorgte Relaisventil 22 steuert über eine weitere Zweigleitung 24 den Druck in einer Hauptluftleitung 25 nach Maßgabe seiner Ansteuerung am Steuerdruckeingang 21.

Die Magnetventile 13 sind aus der Hauptbehälterleitung 9 durch eine Zweigleitung 26 und ein der Relaiseinheit 12 zugehörendes Druckminderventil 27 üblicher Bauart mit Druckluft versorgt.

Im Normalbetrieb bei intakter Elektrik und Elektronik, wobei die Fehlerüberwachung der Regelelektronik 8 keinen Fehler anzeigt, ist das Wechselmagnetventil 18 erregt und verbindet demgemäß den in der Verbindung 15 herrschenden, zweiten Vorsteuerdruck mit dem Steuerdruckeingang 21 des Relaisventils 22, welches eine entsprechende Druckhöhe in die Hauptluftleitung 25 aussteuert. Der Bedienhebel 2 ist manuell in eine dem jeweils erforderlichen Bremssteuervorgang entsprechende Stellung einzustellen, er steuert hierbei den Druckregler 4 und die Schaltorgane 5 stellungsabhängig in entsprechende Stellungen ein. Der Druckregler 4 speist in die Steuerleitung 11 einen entsprechenden, ersten Vorsteuerdruck aus, welcher jedoch nur bis zum Wechselmagnetventil 18 gelangt, und die Schaltorgane steuern die Regelelektronik 8 derart an, daß diese durch entsprechende Erregung der Magnetventile 13 einen dem vorliegenden entspre-chenden Bremssteuerungsvorgang entsprechen-den, zweiten Vorsteuerdruck in die Verbindung 15 und durch das Wechselmagnetventil 18 zum Relaisventil 22 aussteuern.

Tritt in der Elektrik oder Elektronik ein Fehler auf, welcher die Fehlerüberwachung der Regelelektronik 8 zum Ansprechen bringt, so entregt diese das Wechselmagnetventil 18, welches demgemäß in seine Notschaltstellung schaltet und unter Abtrennung der Verbindung 15 den Steuerdruckeingang 21 mit der Steuerleitung 11 verbindet. Durch die gemeinsame und synchrone Betätigung des Druckreglers 4 und der Schaltorgane 5 durch den Bedienhebel 2 bedingt, herrschen zu diesem Zeitpunkt in der Verbindung 15 und der Steuerleitung 11 zumindest annähernd gleiche Druckhöhen, so daß am Steuerdruckeingang 21 kein abrupter Druckwechsel erfolgt. Die Umstellung von Normal- auf Notbetrieb erfolgt also völlig selbsttätig und ohne Änderung des augenblicklich herrschenden Bremssteuerungszustandes und damit ruckfrei. Im weiteren ist die Druckluftbremse wie vorher durch entsprechende Einstellung des Bedienhebels 2 steuerbar, wobei nunmehr der Ausgangsdruck des Druckreglers 4 über das Wechselmagnetventil 18 das Relaisventil 22 entsprechend ansteuert.

Bei Wegfall des Fehlers und Rücksetzen der Fehlerüberwachung steuern die Magnetventile 13 in die Verbindung 15 jedenfalls wieder eine korrekte Vorsteuerdruckhöhe ein, das Wechselmagnetventil 18 wird wieder erregt und schaltet in seine Normalschaltstellung zurück. Damit wird ebenfalls ruckfrei und gegebenenfalls selbsttätig der Ausgangszustand wieder erreicht.

Durch entsprechendes Betätigen des Schalters 6 kann über die Regelelektronik 8 die Erregung des Wechselmagnetventils 18 willkürlich gesteuert werden, so daß ein willkürliches Einstellen der Normal- oder Notschaltstellung möglich ist.

Die Regelelektronik 8 kann selbstverständlich zum Zusammenwirken mit einer automatischen Fahr- und Bremssteuerung ausgestattet sein; falls in dieser ein Fehler auftritt, kann ein Betätigen des Schalters 6 zweckmäßig sein.

Bezugszeichenliste

| | |
|---|---|
| 1 | Bedieneinheit |
| 2 | Bedienhebel |
| 3 | Nockenscheibe |
| 4 | Druckregler |
| 5 | Schaltorgane |
| 6 | Schalter |
| 7 | Leitungen |
| 8 | Regelelektronik |
| 9 | Hauptbehälterleitung |
| 10 | Zweigleitung |
| 11 | Steuerleitung |
| 12 | Relaiseinheit |
| 13 | Magnetventile |
| 14 | Leitungen |
| 15 | Verbindung |
| 16 | Druck-Spannungs-Wandler |
| 17 | Leitung |
| 18 | Wechselmagnetventil |
| 19 | Leitung |
| 20 | Verbindung |
| 21 | Steuerdruckeingang |
| 22 | Relaisventil |
| 23 | Zweigleitung |
| 24 | Zweigleitung |
| 25 | Hauptluftleitung |
| 26 | Zweigleitung |
| 27 | Druckminderventil |

**Patentansprüche**

1.  Führerbremsventileinrichtung für Druckluftbremsen von Schienenfahrzeugen, mit
    - zumindest einer in einem Führerstand anzuordnenden Bedieneinheit (1), umfassend einen willkürlich verstellbaren Druckregler (4) zur Steuerung eines ersten Vorsteuerdruckes und willkürlich schaltbare, elektrische Schaltorgane (5) zum Überwachen der Erregung von einen zweiten Vorsteuerdruck steuernden Magnetventilen (13),
    - einer Relaiseinheit (12), die ein Relaisventil (22) zum Steuern eines Hauptluftleitungsdruckes aufweist, und
    - einer Umschaltvorrichtung, welche dem Relaisventil (22) in einer Normalschaltstellung bei intakten, elektrischen Schaltorganen bzw. Magnetventilen den zweiten Vorsteuerdruck, in einer Notschaltstellung bei gestörten, elektrischen Schaltorganen bzw. Magnetventilen den ersten Vorsteuerdruck an einen Steuerdruckeingang (21) zuführt,

    dadurch gekennzeichnet, daß

    - mittels eines Bedienhebels (2) der Druckregler (4) und die elektrischen Schaltorgane (5) gemeinsam und synchron stellungsabhängig einstellbar sind,
    - die elektrischen Schaltorgane (5) eine Regelelektronik (8) mit Fehlerüberwachung beinhalten, und
    - die Umschaltvorrichtung ein von der Fehlerüberwachung der Regelelektronik (8) ansteuerbares Wechselmagnetventil (18) zwischen dem ersten und dem zweiten Vorsteuerdruck und dem Steuerdruckeingang (21) des Relaisventil (22) aufweist, das bei fehlender Fehlermeldung der Fehlerüberwachung erregt und in die Normalschaltstellung geschaltet, bei Vorliegen einer Fehlermeldung unerregt und in die Notschaltstellung geschaltet ist.

2. Führerbremsventil nach Anspruch 1, dadurch gekennzeichnet, daß an der Bedieneinheit (1) ein willkürlich betätigbarer Schalter (6) zum zusätzlichen, willkürlichen Steuern des Erregungszustandes des Wechselmagnetventils (18) vorgesehen ist.

## Claims

1. Driver's brake valve device for compressed air brakes of rail vehicles, comprising
   - at least one actuating unit (1) to be arranged on a driver's stand, including a pressure regulator (4), capable of being arbitrarily adjusted, for control of a first pilot pressure and arbitrarily controllable electric switching means (5) for supervising the energization of magnet valves (13) controlling a second pilot pressure;
   - a relay unit (12), provided with a relay valve (22) for control of a main air brake pipe pressure, and
   - a change-over device which, when being in a normal position and the electric switching means or magnet valves being intact, admitting the second pilot pressure to the relay valve (22), whereas, when being in an emergency position, the electric switching members or magnet valves being defective, admitting the first pilot pressure to the control pressure port (21),

   wherein

   - the pressure regulator (4) and the electric means (5) are capable of being set in common and synchronously by means of an actuating lever (2), depending on the latter's position;
   - the electric switching means (5) comprise a control electronics (8) with error control and
   - the change-over device is provided with a shuttle magnet valve (18), capable of being controlled by the error control unit of the control electronics (8) between the first and the second pilot pressure and the control pressure port (21) of relay valve (22) which, in case of absence of an error message of the error control unit is energized, being placed in normal position, in case of an error message having been issued, is not energized, being placed in emergency position.

2. Driver's brake valve as per Claim 1, in which the actuating unit (1) is provided with a switch (6), capable of being arbitrarily actuated for additional arbitrary control of the energization of a shuttle magnet valve.

## Revendications

1. Installation à robinet de frein du mécanicien pour des freins à air comprimé de véhicules sur rails, comprenant :
   - au moins une unité de manoeuvre à disposer au poste de conduite (1) et comportant un régulateur de pression (4) réglable intentionnellement pour commander une première pression de précommande, ainsi que des organes électriques de commutation (5), commandés intentionnellement pour contrôler l'excitation d'électrovannes (13) qui commandent une seconde pression de précommande,
   - une unité de relais (12) comportant une soupape de relais (22) pour commander une pression dans la conduite principale, et
   - un dispositif de commutation qui applique, au niveau d'une entrée (21) de la pression de commande, à la soupape de relais (22), dans une position de commutation normale et dans le cas d'organes électriques de commutation, ou d'électrovannes intactes, la seconde pression de précommande, et qui applique dans une position de commutation d'urgence et dans le cas d'organes électriques de commutation ou d'électrovannes en dérangement, la première pression de préréglage,

   caractérisé par le fait
   - qu'à l'aide d'un levier de manoeuvre (2), le régulateur de pression (4) et les organes électriques de commutation (5) sont réglables en commun et en synchronisme du point de vue de la position,
   - que les organes électriques de commutation (5) comportent une électronique de réglage (8) à surveillance de défauts, et
   - que le dispositif de commutation comporte, entre la première et la seconde pression de précommande et l'entrée de la pression de commande (21), une électrovanne à action alternée (18) qui est susceptible d'être attaquée par la surveillance de défauts de l'électronique de réglage (8), et qui, en l'absence de signalisation d'un défaut de la surveillance de défauts, est excitée et est commutée dans sa position de commutation normale, alors qu'en présence de la signalisation d'un défaut elle est désexcitée et commutée dans sa position de commutation d'urgence ou de secours.

2. Robinet de frein du mécanicien selon la revendication 1, caractérisé par le fait qu'il est prévu sur l'unité de manoeuvre (1) un interrupteur (6) susceptible d'être actionné intentionnellement pour la commande supplémentaire et intentionnelle de l'état d'excitation de l'électrovanne à action alternée (18).